Europäisches Patentamt

European Patent Office

Office européen des brevets

(19)

(11) Veröffentlichungsnummer : **0 051 575**
**B1**

(12) **EUROPÄISCHE PATENTSCHRIFT**

(45) Veröffentlichungstag der Patentschrift :
21.01.87

(21) Anmeldenummer : 81850202.3

(22) Anmeldetag : 30.10.81

(51) Int. Cl.⁴ : **B 62 D  27/06**, B 62 D  33/02,
B 61 D   3/08

(54) **Runge für Ladeplattformen.**

(30) Priorität : 03.11.80 DE 8029162 U

(43) Veröffentlichungstag der Anmeldung :
12.05.82 Patentblatt 82/19

(45) Bekanntmachung des Hinweises auf die Patenterteilung : 21.01.87 Patentblatt 87/04

(84) Benannte Vertragsstaaten :
AT BE CH DE FR GB IT LI NL SE

(56) Entgegenhaltungen :
WO-A-80 /018 97

(73) Patentinhaber : **Rosén, Göran**
**Rädagatan 5**
**S-531 51 Lidköping (SE)**

(72) Erfinder : **Rosén, Göran**
**Rädagatan 5**
**S-531 51 Lidköping (SE)**

(74) Vertreter : **Roth, Ernst Adolf Michael et al**
**GÖTEBORGS PATENTBYRA AB Box 5005**
**S-402 21 Göteborg (SE)**

## Beschreibung

Die vorliegende Neuerung betrifft eine Runge für Ladeplattformen von Fahrzeugen, mit mindestens einer Verschlußvorrichtung zur Arretierung einer Seitenplanke gegenüber der Runge, in der mindestens ein mittels eines Bedienungshebels verschiebbarer Arretierbolzen gelagert ist, welcher mit einem Arretierbügel in die Seitenplanke in Eingriff bringbar ist (siehe DE-A-2 444 021).

Bei internationaler Transitbeförderung von Lasten über mehrere Grenzen muß nach der TIR (Transport International par la Route) — Konvention der Lagerraum bzw. die äußere Umgrenzung einer Ladeplattform, beispielsweise die Verschlüsse der Seitenplanken von der Zollbehörde plombiert werden. Durch verschiedene Manipulationen ist es möglich Zugang zu dem Ladegut zu schaffen, ohne die Plombierung zu beschädigen. Hier setzt die Neuerung ein, deren Aufgabe es ist eine Runge zu schaffen, die plombierbar ist und bei der nach erfolgter Plombierung die Betätigungshebel zum Öffnen der Verschlußvorrichtungen für die Seitenplanken gesperrt sind. Diese Aufgabe wird dadurch gelöst, daß die Runge an ihrer der Ladeplattform abgewandten Seite im Bereich des Arretierbolzens mit einem schwenkbar gelagerten ösenförmigen Organ zur Aufnahme des Plombierungsdrahtseils versehen ist, das den Arretierbolzen in seiner Sperrstellung bei aus der Runge teilweise ausgeschwenkter Stellung formschlüssig verriegelt und nur bei eingeschwenkter Stellung entriegelt. Im folgenden wird ein Ausführungsbeispiel der Neuerung an Hand der Zeichnungen näher beschrieben. Es zeigen

Figur 1 eine Vorderansicht eines Teiles einer neuerungsgemäßen Runge,

Figur 2 eine Aufsicht auf die neuerungsgemäße Runge nach Fig. 1 nach entfernter Rückplatte,

Figur 3 einen Längsschnitt durch eine neuerungsgemäße Runge längs der Linie III-III der Fig. 2,

Figur 4 eine Aufsicht auf eine modifizierte Runge nach entfernter Rückplatte,

Figur 5 einen Längsschnitt durch eine modifizierte Runge längs der Linie V-V der Fig. 4.

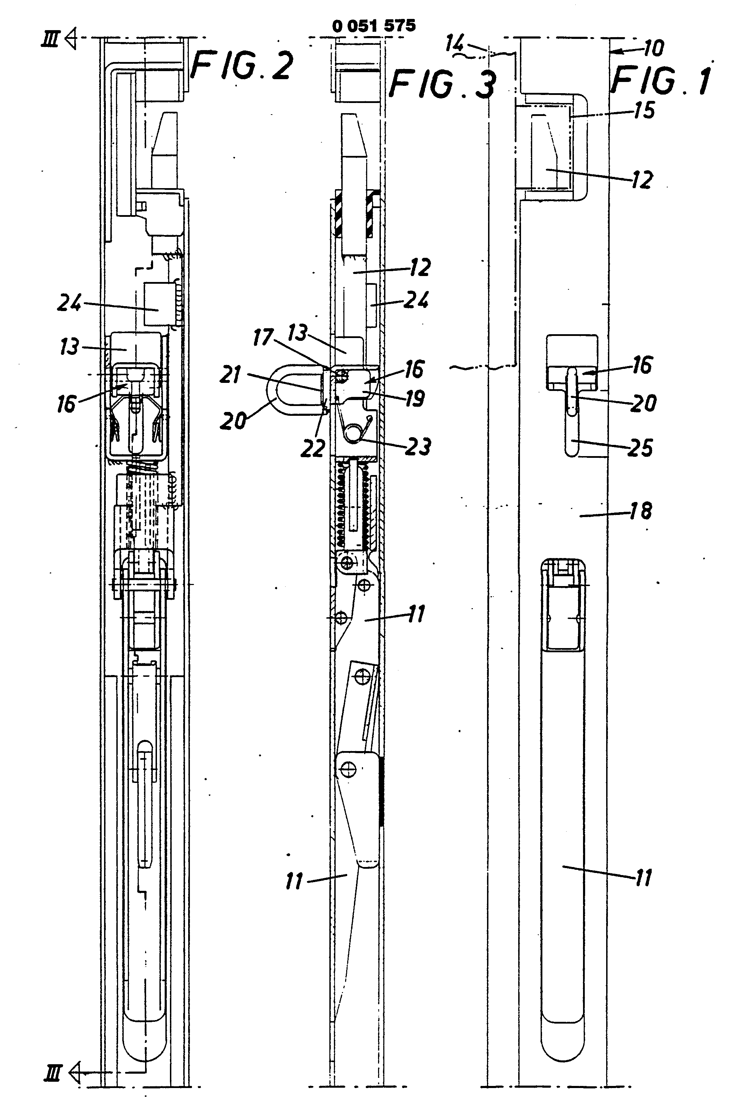

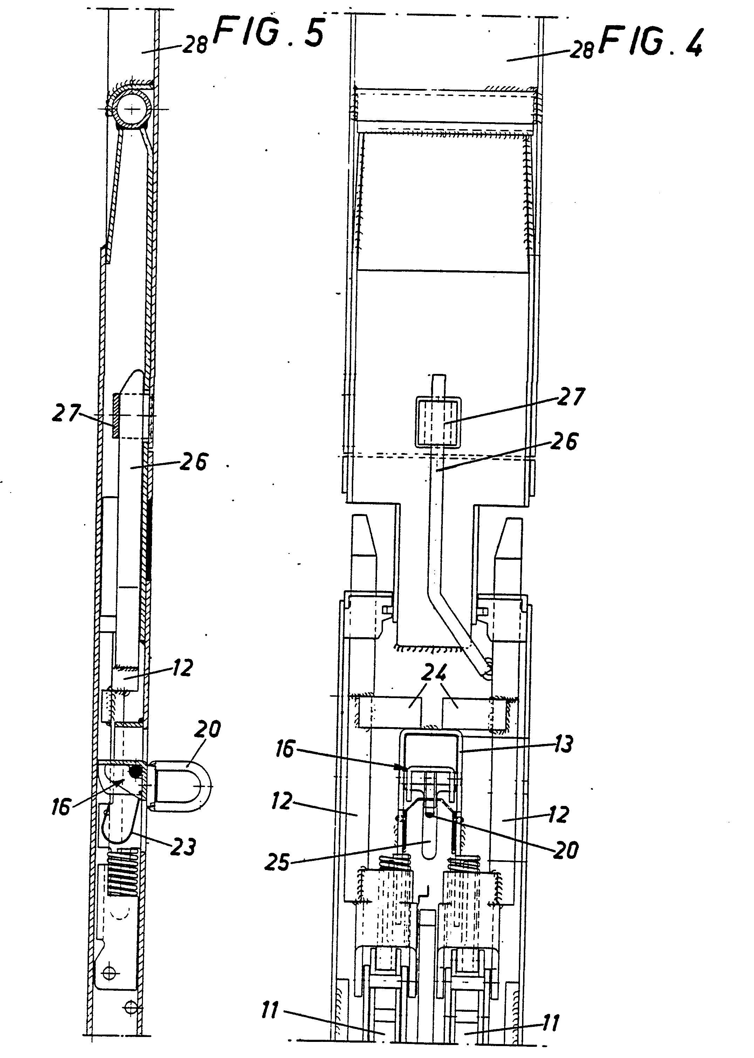

Die konstruktive Bauart der neuerungsgemäßen Runge 10 ist ansich beispielsweise durch die Druckschrift DE-C-1 780 395 bzw. die Druckschrift DE-A-24 44 021 bekannt. Danach besteht sie aus einer nicht näher dargestellten Befestigungsvorrichtung, mit welcher sie an der Seitenkante der Ladeplattform durch Betätigen eines Bedienungshebels 11 befestigbar ist. Mit dem gleichen Bedienungshebel 11 ist ein Arretierbolzen 12 in der Runge axial verschiebbar, dessen freies Ende in einen an der Seitenplanke 14 des Fahrzeugs angebrachten Arretierbügel 15 eingeführt werden kann. Das Ausführungsbeispiel gemäß der Fig. 1-3 zeigt eine Runge mit einem Arretierbolzen 12 für den Anschluß einer Seitenplanke 14. Sollen zwei Seitenplanken an eine gemeinsame Runge angeschlossen werden, weißt die Runge 2 solche Arretierbolzen auf, wie dies in dem Ausführungsbeispiel gemäß Fig. 4 und 5 dargestellt ist.

Im Inneren der Runge 10 ist eine Halterung 13 für ein ösenförmiges Organ 16 angebracht, das als zweiarmiger Hebel ausgebildet und mit einem Drehzapfen 17 versehen ist, der durch die Halterung 13 an der Frontplatte 18 der Runge befestigt ist. Das als zweiarmiger Hebel ausgebildete ösenförmige Organ 16 besteht aus einem ersten Arm 19, in welchem der Drehzapfen 17 befestigt ist, sowie einem zweiten Arm 20, welcher als Öse ausgebildet ist. Die Öse ist um eine Drehachse 21 in einem Lager 22 drehbar gelagert, wobei die Drehachse 21 rechtwinklig zur Achse des Drehzapfens 17 ausgerichtet ist. Die Achse des Drehzapfens 17 ist gleichzeitig die Schwenkachse des zweiarmigen Hebels, dessen erster Arm 19 exzentrisch durch eine Feder 23 so belastet ist, daß das ösenförmige Organ 16 wie ein bistabiles Sperrgetriebe in jeder der beiden Endstellungen stabil gehalten ist. Die Fig. 1 und 2 veranschaulichen das ösenförmige Organ 16 in einer aus der Runge teilweise ausgeschwenkten Stellung, in welcher sich die Öse 20 außerhalb der Runge befindet, während der erste Arm 19 in dem Bewegungsbereich des Arretierbolzens 12 innerhalb der Runge geschwenkt ist. In dieser Stellung wird der Arretierbolzen 12 daran gehindert, sich bei Betätigung des Bedienungshebels 11 mehr als ein kurzes Stück entsprechend dem Schwenkradius des ösenförmigen Organs 16 zu bewegen. Ein vom Arretierbolzen 12 abstehender Absatz 24 stößt bei Betätigung des Bedienungshebels 11 gegen den zweiten Arm 19, wodurch der Arretierbolzen 12 nicht aus dem Arretierbügel 15 in der Seitenplanke 14 herausgezogen und so die Seitenplanke nicht freigegeben werden kann.

Eine Ladeplattform eines LKW's hat gewöhnlich zwischen 6-12 Rungen und ebensoviele neuerungsgemäße Ösen, durch die ein Drahtseil gezogen und endseitig plombiert wird, wodurch weder die Seitenplanken der Ladeplattform herabgeklappt noch die Rungen von dieser entfernt werden können. Nach Entfernung des Plombierungsdrahtseils kann das ösenförmige Organ 16 um den Drehzapfen 17 geschwenkt werden, und zwar etwa um 90°, wodurch die Öse 20 durch eine Ausnehmung 25 in der Frontplatte der Runge in diese eingeschwenkt wird, dabei wird der 1. Arm 19 aus dem Bewegungsbereich des Arretierbolzens 12 geschwenkt und der Absatz 24 kann sich frei an dem ösenförmigen Organ 16 vorbeibewegen.

Durch die exzentrische und seitlich versetzte Anordnung des Angriffpunktes der Feder 23 in Bezug auf den Drehzapfen 17 ergibt sich ein bistabiles Sperrgetriebe. Beim Schwenken des ösenförmigen Organs wird die Feder 23, deren erstes Ende sich gegen die Rungenwand abstützt und deren zweites Ende mit dem ösenförmigen Organ 16 im Eingriff ist, um das erste Ende geschwenkt, bis zum Erreichen des Todpunktes gespannt und bei weiterem Schwenken wieder entspannt, wodurch das ösenförmige Organ in seinen beiden Endstellungen durch Federdruck stabil gehalten wird, während in Zwischenstellungen die Feder bestrebt ist, das Organ in eine dieser Endstellungen, entsprechend der Lage der Zwischenstellung zum Todpunkt zu bringen.

Sind die Rungen der Ladeplattform mit abnehmbaren vertikalen Stützen für eine Abdeckplane oder dergleichen versehen, so wie dies beispielsweise in der deutschen Patentschrift 1 956 809 beschrieben ist, ist es mit Rücksicht auf die Forderungen der TIR-Konvention wichtig, daß die Abdeckplane nicht abgenommen werden kann, ohne die Plombierung zu beschädigen. Um dies sicherzustellen ist neuerungsgemäß der Arretierbolzen 12, wie in Fig. 4 und 5 dargestellt, mit einem Riegel 26 versehen, der in einen Sperrbügel 27 in der abnehmbaren vertikalen Stütze 28 einführbar ist.

In Sperrstellung des Arretierbolzens 12 wird bei dieser Ausführung somit sowohl die Seitenplanke wie auch die Stütze für die Abdeckplane verriegelt.

## Patentansprüche

1. Runge für Ladeplattformen von Fahrzeugen, mit mindestens einer Verschlußvorrichtung zur Arretierung einer Seitenplanke (14) gegenüber der Runge (10), in der mindestens ein mittels eines Bedienungshebels (11) verschiebbarer Arretierbolzen (12) gelagert ist, welcher mit einem Arretierbügel (15) in der Seitenplanke (14) in Eingriff bringbar ist, dadurch gekennzeichnet, daß die Runge (10) an ihrer der Ladeplattform abgewandten Seite im Bereich des Arretierbolzens (12) mit einem schwenkbar gelagerten ösenförmigen Organ (16) zur Aufnahme des Plombierungsdrahtseils versehen ist, das den Arretierbolzen (12) in seiner Sperrstellung, bei aus der Runge (10) teilweise ausgeschwenkter (16) Stellung formschlüssig verriegelt und nur bei eingeschwenkter Stellung entriegelt.

2. Runge nach Anspruch 1, dadurch gekennzeichnet, daß das ösenförmige Organ (16) um einen seine Schwenkachse bildenden Drehzapfen (17) schwenkbar gelagert ist, daß eine Feder (23), deren erstes Ende gegen die Rungenwand abgestützt und deren zweites Ende mit dem ösenförmigen Organ (16) exzentrisch zur und im Abstand von der Schwenkachse im Eingriff ist, vorgesehen ist, und daß das ösenförmige Organ (16) mittels der um das erstes Ende schwenkbaren Feder (23) sowohl in der einen als auch in der anderen Endstellung fixierbar ist.

3. Runge nach Anspruch 1 oder 2, dadurch gekennzeichnet, daß das ösenförmige Organ (16) als zweiarmiger Hebel ausgebildet ist, dessen erster Arm (19) bei ausgeschwenkter Stellung in den Bewegungsbereich des Arretierbolzens (12) eingreift und dessen zweiter Arm (20) als Öse ausgebildet ist, welche um eine senkrecht zur Schwenkachse (17) des ösenförmigen Organs (16) ausgerichtete Schwenkachse des Lagers (22) schwenkbar ist.

## Claims

1. A stanchion for loading platforms of vehicles, with at least one locking device for securing a side flap (14) to the stanchion (10), in which is supported at least one locking bolt (12), which is displaceable by means of an operating lever (11), said bolt being engageable with a locking loop (15) in the side flap (14), characterized therein, that the stanchion (10) on its side facing away from the loading platform, in the area of the locking bolt (12), is provided with a pivotably supported cramp-shaped member (16) for receiving the sealing cable, which member under interconnection by shape locks the locking bolt (12) in its locking position when partly swung out from the stanchion (10), and releases it in its folded in position only.

2. A stanchion as claimed in claim 1, characterized therein, that the cramp-shaped member (16) is pivotably supported about a pivot (17) constituting its pivot axle, that a spring (23), is arranged to rest with its first end against the stanchion wall and to engage with its second end the cramp-shaped member (16) eccentric to and at a distance from the pivot axle, and that the cramp-shaped member (16) is securable in its first as well as in its second end position, by means of the spring (23) which is pivotable about its first end.

3. A stanchion as claimed in claim 1 or 2, characterized therein, that the cramp-shaped member (16) is designed as a two-armed lever, the first arm (19) of which, in the swung out position engages in the area of motion of the locking bolt (12) and the second arm (20) of which is formed as a loop, which is pivotable about a pivot axle of the bush (22) for the member, said pivot axle being directed perpendicularly to the pivot axle (17) of the cramp-shaped member (16).

## Revendications

1. Etançon pour des plateformes de chargement de véhicules comportant au moins un dispositif de verrouillage pour fixer un volet latéral (14) contre l'étançon (10) dans lequel est logé au moins un axe de blocage (12) déplaçable par un levier de manœuvre (11) et pouvant être en prise avec un élément de verrouillage (15) dans le volet latéral (14), caractérisé en ce qu'il comprend sur son côté opposé à la plateforme de chargement au niveau de l'axe de blocage (12) un élément (16) en forme de crampon logé pivotant, destiné à recevoir le câble de fermeture, qui verrouille en prise l'axe de blocage (12) dans sa position de verrouillage lorsqu'il est partiellement pivoté vers l'extérieur de l'étançon (10) et qui le déverrouille seulement dans la position pilotée vers l'intérieur.

2. Etançon selon la revendication 1, caractérisé en ce que l'élément en forme de crampon (16) est logé pivotant autour d'un-pivot (17) formant son axe de pivotement, en ce qu'un ressort (23) est prévu pour reposer avec sa première extrémité contre la paroi de l'étançon et pour venir en prise excentrique avec sa seconde extrémité par rapport à la distance de l'axe de pivotement avec l'élément en forme de crampon (16) et en ce que l'élément en forme de crampon (16) peut être fixé aussi bien dans sa première position que dans sa seconde position d'extrémité au moyen du ressort (23) orientable autour de sa première extrémité.

3. Etançon selon la revendication 1 ou 2, caractérisé en ce que l'élément en forme de crampon (16) est réalisé sous la forme d'un levier à deux bras dont le premier bras (19) s'engage dans la zone de déplacement de l'axe de blocage (12) en position pivotée vers l'extérieur et dont le deuxième bras (20) est en forme d'anneau qui est monté pivotant autour d'un axe de pivotement du palier (22) orienté perpendiculairement à l'axe de pivotement (17) de l'élément en forme de crampon (16).

0 051 575

FIG. 2    FIG. 3    FIG. 1

FIG.5

FIG.4